# EUROPEAN PATENT APPLICATION

(11) **EP 4 852 033 A1**
(43) Date of publication of application: **09.12.2026**
(21) Application number: 25748830.4
(22) Date of filing: 30.01.2025
(51) Int. Cl.: H01F 7/16, F16K 31/06, H01F 7/121

(54) **SOLENOID DEVICE**

(30) Priority: 02.02.2024 JP 2024015155
(71) Applicant: Eagle Industry Co., Ltd., Minato-ku Tokyo 105-8587 (JP)
(72) Inventor: KAMEI Yohei, Tokyo 105-8587 (JP); FUKUNAGA Shuji, Tokyo 105-8587 (JP); IWANAGA Hiroyuki, Tokyo 105-8587 (JP); HIROTA Koji, Tokyo 105-8587 (JP)
(74) Representative: Patentquadrat Patentanwaltsgesellschaft mbH
(86) International application number: PCT/JP2025/003079
(87) International publication number: WO 2025/164740

(57) **Abstract**

A solenoid device capable of preventing a bearing from slipping out to the interior side is provided. A solenoid device 1 includes a coil 2, a body 3, a movable core 4 arranged in an accommodation portion S2 which is formed on the radially inner side of the body 3, an axial rod 5 to be moved together with the movable core 4, and a bearing 9 that extends from the accommodation portion S2 side to an interior side S1 and guides movement of the axial rod 5, in which the housing portion S2 and the interior side S1 communicate with each other by means of fluid, and the solenoid device 1 has a retaining mechanism 31c that regulates the bearing 9 from moving from the accommodation portion S2 side to the interior side S1.

## Description

### {TECHNICAL FIELD}

The present invention relates to a solenoid device, for example, a solenoid device that actuates various devices by a movable core.

### {BACKGROUND ART}

A solenoid device is utilized in a variety of industrial fields as means of actuating various devices such as valves and machines. The solenoid device actuates various devices by electromagnetically moving a movable core arranged in a reciprocating manner when a current is passed through a coil.

A solenoid device shown in Patent Citation 1 includes a solenoid main body having a coil, a plunger, a center post, a sleeve, a cap, a rod, and a bearing. The solenoid main body is formed in a hollow shape. On the radially inner side of the solenoid main body, an accommodation portion that houses the plunger is formed by the center post, the sleeve, and the cap. The rod is coupled to the plunger. In a through hole passing through in the axial direction of the center post, the bearing is arranged. The rod is inserted through this bearing. Thereby, the rod to be moved in the axial direction together with the plunger is not easily tilted by being guided by the bearing, and it is possible to stabilize a stroke amount of the rod with respect to an amount of a current passing through the solenoid main body.

### {CITATION LIST}

### {Patent Literature}

Patent Citation 1: JP H9-89145 A (Pages 4, 5, FIG. 1)

### {SUMMARY OF INVENTION}

### {Technical Problem}

In the solenoid device as in Patent Citation 1, a flow passage passing through in the axial direction is formed in the rod, and an actuated fluid can be distributed by the accommodation portion and the interior side which is a space on the actuated object side. Also, in the plunger, a hole passing through in the axial direction is formed, and communication is provided between a space on the center post side of the plunger in the accommodation portion and a space on the cap side. Thereby, resistance generated at the time of moving the plunger and the rod is reduced. Thus, the plunger and the rod are easily smoothly moved.

However, in the solenoid device as in Patent Citation 1, there is sometimes a case where a differential pressure is generated between the accommodation portion and the interior side. In particular, when a fluid pressure of the accommodation portion becomes higher than a fluid pressure of the interior side, there is a possibility that the bearing is moved to the interior side and slips out.

The present invention has been achieved focusing on such a problem, and an object of the present invention is to provide a solenoid device capable of preventing a bearing from slipping out to the interior side.

### {Solution to Problem}

In order to solve the foregoing problem, a solenoid device according to the present invention is a solenoid device including a coil; a body; a movable core arranged in an accommodation portion which is formed on a radially inner side of the body; an axial rod to be moved together with the movable core; and a bearing that extends from an accommodation portion side on which the accommodation portion is disposed toward a machine interior side on which an object to be actuated by the solenoid device is disposed, and that is configured to guide movement of the axial rod, wherein the accommodation portion and the interior side communicate with each other by means of fluid, and wherein the solenoid device has a retaining mechanism configured to regulate the bearing from moving from the accommodation portion side to the interior side. According to the feature of the present invention, even when a differential pressure is generated between the side of the accommodation portion and the interior side, it is possible to prevent the bearing from slipping out to the interior side.

It may be preferable that the retaining mechanism is a convex portion protruding toward a radially inner side in the interior side of the body. According to this preferable configuration, it is possible to simply and conveniently configure the retaining mechanism.

It may be preferable that the convex portion is installed between the interior side and the bearing. According to this preferable configuration, it is possible to prevent the bearing from slipping out to the interior side with a simpler and more convenient configuration.

It may be preferable that the convex portion is formed in a ring shape. According to this preferable configuration, it is possible to more reliably prevent the bearing from slipping out to the interior side. Also, it is possible to enhance a structural strength of the convex portion.

It may be preferable that the retaining mechanism is a flange of the bearing. According to this preferable configuration, it is possible to simply and conveniently configure the retaining mechanism.

It may be preferable that the body is provided with a fixed core formed in a tubular-bottomed shape, and a holding member configured to hold the bearing. According to this preferable configuration, it is possible to simply and conveniently arrange the bearing.

It may be preferable that the fixed core has an integral structure configured for housing the movable core. According to this preferable configuration, it is possible to assemble the body only by attaching a holding portion to the fixed core. Thus, assembling is simple and convenient.

### {BRIEF DESCRIPTION OF DRAWINGS}

FIG. 1 is a cross-sectional view of a solenoid device according to a first embodiment of the present invention.
FIG. 2A is a cross-sectional view of Modified Example 1 of a retaining mechanism in the first embodiment; FIG. 2B is a cross-sectional view of Modified Example 2 of the retaining mechanism; FIG. 2C is a cross-sectional view of Modified Example 3 of the retaining mechanism; FIG. 2D is a cross-sectional view of Modified Example 4 of the retaining mechanism; and FIG. 2E is a cross-sectional view of Modified Example 5 of the retaining mechanism.
FIG. 3 is a cross-sectional view of a solenoid device according to a second embodiment of the present invention.

### {DESCRIPTION OF EMBODIMENTS}

Modes for carrying out a solenoid device according to the present invention will be described on the basis of embodiments.

### {First embodiment}

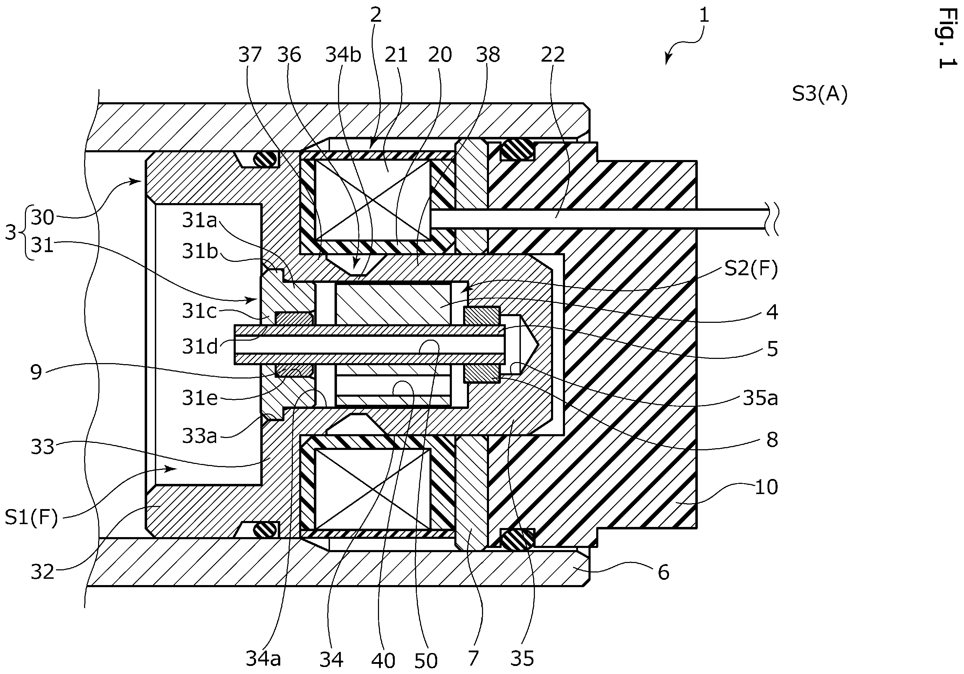

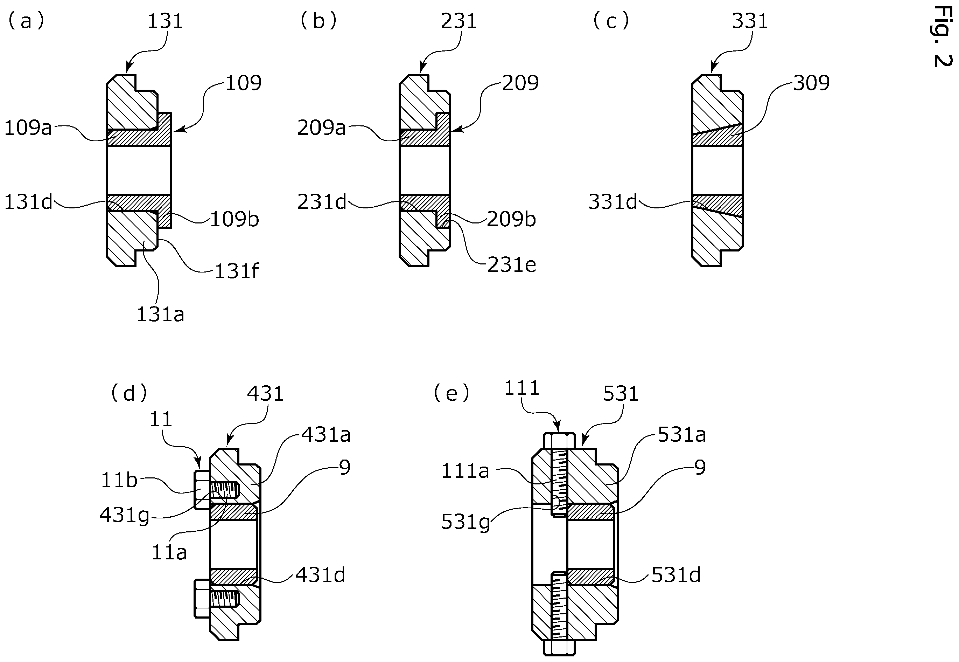

A solenoid device according to a first embodiment will be described with reference to FIGS. 1 and 2. Hereinafter, the right and left sides of FIG. 1 will be described as the right and left sides of the solenoid device.

As illustrated in FIG. 1, a solenoid device 1 is a solenoid mainly configured by a coil 2, a body 3, a movable core 4, an axial rod 5, a solenoid case 6, a plate 7, two bearings 8, 9, and a cap 10.

The coil 2 is mainly configured by a ring-shaped bobbin 20 made of an insulating body, and a conductive wire 21 wound around an outer periphery of the bobbin 20 by predetermined number of times. The conductive wire 21 is connected to a lead wire 22. By supplying electric power from a power supply (not illustrated) through the lead wire 22, the coil 2 generates magnetic flux.

The coil 2 is inserted onto a small diameter peripheral wall 34 of the body 3. In other words, part of the body 3 is positioned on the radially inner side of the coil 2. Also, the coil 2 is sandwiched and fixed by a ring-shaped side wall 33 of the body 3 and the plate 7 in the axial direction.

The body 3 includes a cylindrical bottomed and stepped fixed core 30 made of a magnetic body such as iron, and a cylindrical stepped holding member 31 made of a magnetic body.

The fixed core 30 has an integral structure having a large diameter peripheral wall 32, the ring-shaped side wall 33, the small diameter peripheral wall 34, and a side wall 35 in order from the axially left side.

The large diameter peripheral wall 32 is formed in a cylindrical shape extending in the axial direction.

The ring-shaped side wall 33 extends on the radially inner side from an axially right end of the large diameter peripheral wall 32. In an intersecting point between the ring-shaped side wall 33 and the small diameter peripheral wall 34, a ring-shaped step portion 33a recessed on the axially right side from an axially left end surface of the ring-shaped side wall 33, the ring-shaped step portion opening toward the axially left side and the radially inner side is formed.

A surface on the right side of the ring-shaped step portion 33a is an inner peripheral surface 34a of the small diameter peripheral wall 34.

The small diameter peripheral wall 34 is formed in an outside-stepped cylindrical shape extending in the axial direction from a radially inner end of the ring-shaped side wall 33.

The inner peripheral surface 34a of the small diameter peripheral wall 34 extends in a straight manner in the axial direction. Also, the inner peripheral surface 34a extends substantially parallel to the axis of the small diameter peripheral wall 34. That is, an inner diameter of the small diameter peripheral wall 34 is substantially constant over the axial direction.

On the left side of an axial center of the small diameter peripheral wall 34, a ring-shaped recessed portion 36 formed in a trapezoid in a cross-sectional view is formed. The ring-shaped recessed portion 36 is recessed on the radially inner side from an outer peripheral surface of the small diameter peripheral wall 34, and opens toward the radially outer side.

In the small diameter peripheral wall 34, portions on both the sides in the axial direction of the ring-shaped recessed portion 36 have a substantially constant size in the radial direction, that is, a substantially constant thickness.

In the small diameter peripheral wall 34, a portion positioned at a point of the ring-shaped recessed portion 36 which is recessed on the radially innermost side has the least thickness. This portion of the least thickness is a thin portion 34b.

The thin portion 34b is formed in a cylindrical shape extending with the substantially same thickness over the circumferential direction. The thin portion 34b is a portion of the least thickness in the small diameter peripheral wall 34, with the highest magnetic resistance in the small diameter peripheral wall 34.

It is noted that in the following description, a portion of the small diameter peripheral wall 34 on the axially left side of the thin portion 34b is a first peripheral wall portion 37, and a portion on the axially right side of the thin portion 34b is a second peripheral wall portion 38.

The side wall 35 continues to an axially right end of the small diameter peripheral wall 34 and closes the axially right end of the small diameter peripheral wall 34.

In a center on the radially inner side of the side wall 35, a stepped recessed portion 35a recessed on the axially right side of an axially left end surface of the side wall 35, and opens toward the axially left side is formed. The axis of the stepped recessed portion 35a substantially matches with the axis of the small diameter peripheral wall 34.

Regarding the stepped recessed portion 35a, a diameter of a portion on the axially left side is increased, and the bearing 8 is fitted into and fixed to this portion of the increased diameter.

The holding member 31 has a cylindrical base portion 31a. A ring-shaped flange 31b expanding on the radially outer side is formed on the radially outer side of an axially left end of the base portion 31a. The axis of the flange 31b substantially matches with the axis of the base portion 31a.

On the radially inner side of the axially left end of the base portion 31a, a convex portion 31c serving as a retaining mechanism is formed. The convex portion 31c expands on the radially inner side of the axially left end of the base portion 31a, and is formed in a ring shape. In other words, the convex portion 31c protrudes toward the radially inner side. In a radial center of the convex portion 31c, a through hole 31d passing through in the axial direction is formed.

On the right side of the convex portion 31c in the base portion 31a, a recessed portion 31e is formed. The recessed portion 31e is recessed on the axially left side of an axially right end surface of the base portion 31a, and opens toward the axially right side. The bearing 9 is fitted into and fixed to the recessed portion 31e.

The through hole 31d communicates with the recessed portion 31e. An inner diameter of the through hole 31d is smaller than an inner diameter of the recessed portion 31e, and slightly larger than an outer diameter of the axial rod 5. Also, the axis of the through hole 31d and the axis of the recessed portion 31e substantially match with the axis of the base portion 31a.

The holding member 31 is fitted into and fixed to the ring-shaped side wall 33 of the fixed core 30. In detail, the base portion 31a of the holding member 31 is inserted into the small diameter peripheral wall 34 of the fixed core 30. The flange 31b of the holding member 31 is fitted into the ring-shaped step portion 33a of the fixed core 30. It is noted that the flange 31b may be fixed to the fixed core 30 by an appropriate method such as welding, bonding, and swaging. The same applies to a fixing method of the movable core 4 and the axial rod 5.

In a state where the holding member 31 is fixed to the fixed core 30, the axes of the bearings 8, 9 substantially match with the axis of the small diameter peripheral wall 34. That is, it is possible to substantially match the axes of the bearings 8, 9 only by fixing the holding member 31 to the fixed core 30. Thus, assembling is simple and convenient.

A space surrounded by the large diameter peripheral wall 32 of the fixed core 30, the ring-shaped side wall 33, and the holding member 31 is an interior portion S1. The interior portion S1 is a space on the actuated object side where a valve element, etc., is arranged, and where an actuated fluid F is distributed. In other words, the convex portion 31c is arranged between the bearing 9 and the interior portion S1.

A space surrounded by the small diameter peripheral wall 34 of the fixed core 30, the side wall 35, and the holding member 31 is an accommodation portion S2 where the movable core 4 is housed.

The movable core 4 is made of a magnetic body such as iron and formed in a cylindrical shape. An outer diameter of the movable core 4 is substantially the same over the axial direction. The movable core 4 has a slightly smaller diameter than an inner diameter of the small diameter peripheral wall 34 of the fixed core 30, and is arranged in the accommodation portion S2 formed on the radially inner side of the body 3. The movable core 4 is reciprocatable in the axial direction in the accommodation portion S2.

The axial rod 5 is inserted into and fixed to a radial center of the movable core 4. Also, a communication hole 40 passing through in the axial direction is formed on the radially outer side of the axial rod 5 in the movable core 4.

It is noted that the movable core 4 is pressed by biasing means (not illustrated) in the direction of separating from the holding member 31, that is, to the axially right side. The biasing means can be arranged between the movable core 4 and the holding member 31, or in the interior portion S1. Also, as the biasing means, a plate spring, a compression spring, a bellows, etc., can be used.

The axial rod 5 is formed in a cylindrical shape made of a non-magnetic body such as an aluminum alloy. In a radial center of the axial rod 5, a communication hole 50 passing through in the axial direction is formed.

A right side of the axial rod 5 is inserted through the bearing 8, and a left side is inserted through the bearing 9 and the through hole 31d of the holding member 31. The axial rod 5 is slidable with respect to the bearings 8, 9.

The communication hole 50 of the axial rod 5 communicates with the interior portion S1 of the body 3 and the stepped recessed portion 35a, respectively. The stepped recessed portion 35a communicates with the accommodation portion S2 through a gap between the bearing 8 and the side wall 35, a gap between the bearing 8 and the axial rod 5, etc. That is, the interior portion S1 and the accommodation portion S2 communicate with each other by means of fluid, and the actuated fluid F can be distributed through the accommodation portion S2 as well.

Also, the fixed core 30 is formed in a tubular bottomed shape opening on the interior side, and fixed to an actuating device in a sealed manner. In this state, the accommodation portion S2 does not communicate with a space S3 on the exterior side. The space S3 on the exterior side in the present embodiment is a space on the outside of the solenoid device 1 and the actuating device, where an atmosphere A is distributed.

The solenoid case 6 is made of a magnetic body such as iron and formed in a cylindrical shape. The solenoid case 6 is fitted onto and fixed to the large diameter peripheral wall 32 of the body 3 and the plate 7. A portion between the solenoid case 6 and the large diameter peripheral wall 32 is sealed by a packing. It is noted that the solenoid case may be part of an attached device (not illustrated), or may be attached and fixed to an attached device.

The plate 7 is made of a magnetic body such as iron and formed in a ring-shaped plate shape. The plate 7 is fitted onto and fixed to the small diameter peripheral wall 34 of the body 3.

The cap 10 is made of an insulator and formed in a bottomed cylindrical shape. The cap 10 is fitted into and fixed to an axially right end of the solenoid case 6 in a state where the cap 10 is fitted onto the small diameter peripheral wall 34. A portion between the solenoid case 6 and the cap 10 is sealed by a packing.

Next, drive of the solenoid device 1 will be described.

First, the time of not passing a current through the coil 2 will be described. The movable core 4 in this state is static at a position which is the most separated from the holding member 31.

When passing a current through the coil 2 is started, magnetic flux is generated. In the solenoid device 1, a magnetic path by the magnetic flux generated in the coil 2 is configured. In detail, this magnetic path is mainly configured by the ring-shaped side wall 33 of the body 3, the solenoid case 6, the plate 7, the second peripheral wall portion 38 of the small diameter peripheral wall 34 of the body 3, the movable core 4, and the first peripheral wall portion 37 of the small diameter peripheral wall 34.

As described above, since the thin portion 34b has high magnetic resistance, the magnetic flux is easily transmitted from the first peripheral wall portion 37 of the body 3 to the movable core 4.

Also, a left end of the second peripheral wall portion 38 of the body 3 is formed in a tapered shape where a thickness is increased toward the axially right side. That is, the magnetic resistance is reduced gradually toward the axially right side.

At the time of not passing a current, or immediately after starting passing a current, an axially left end of the movable core 4 is positioned on the radially inner side of a right end of the tapered portion of the first peripheral wall portion 37. That is, the axially left end is positioned on the radially inner side of the portion where the magnetic resistance is high in the second peripheral wall portion 38. From this, the magnetic flux transmitted from the movable core 4 to the first peripheral wall portion 37 flows in the direction of tilting to the axially left side, and generates a suctioning force of suctioning the movable core 4 to the axially left side, that is, the side of the holding member 31.

When the suctioning force exceeds a biasing force of the biasing means, the movable core 4 is moved to the side of the holding member 31.

The axial rod 5 is moved integrally with the movable core 4. At that time, the axial rod 5 is guided by the bearings 8, 9 and moved along the axis of the small diameter peripheral wall 34. Following this, the movable core 4 is moved along the axis of the small diameter peripheral wall 34.

Regarding the movable core 4 and the axial rod 5, by the communication hole 40 or the communication hole 50, even in the interior portion S1 and the accommodation portion S2 into which the actuated fluid F flows, resistance generated at the time of moving is reduced.

The movable core 4 is stopped at a position where the suctioning force and the biasing force of the biasing means are balanced, or upon abutting with a stopper (not illustrated).

Also, the closer the movable core 4 comes to the holding member 31, the more magnetic flux transmitted from the movable core 4 to the first peripheral wall portion 37 flows in the substantially radial direction without being tilted on the axially left side.

Meanwhile, when the movable core 4 comes close to the holding member 31, the magnetic flux is also transmitted from the movable core 4 to the holding member 31. The direction of transmitting the magnetic flux from the movable core 4 to the holding member 31 substantially matches with the direction of suctioning the movable core 4. Thereby, the suctioning force of suctioning the movable core 4 to the side of the holding member 31 more is easily obtained.

When an amount of passing a current through the coil 2 is reduced or passing a current is stopped, by the biasing force of the biasing means (not illustrated), the movable core 4 is moved to the axially right side.

Next, prevention of the bearing 9 from slipping out will be described. For example, in a case where the actuating device is a pilot valve provided in a damper, etc., the accommodation portion S2 always communicates with a space where a pilot pressure is generated through the communication hole 50 of the axial rod 5. That is, a fluid pressure in the accommodation portion S2 becomes the substantially same as the pilot pressure. The more an opening degree of the pilot valve is narrowed down, the more easily the pilot pressure is increased. The pilot pressure can be the maximum when the pilot valve is closed.

Also, the pilot valve is provided between the space where the pilot pressure is generated and the interior portion S1. When the pilot valve is closed, communication between the interior portion S1 and the space where the pilot pressure is generated is disrupted, while the interior portion S1 always communicates with a return path to the damper side. That is, a fluid pressure in the interior portion S1 can be the minimum.

When the fluid pressure in the accommodation portion S2 becomes higher than the fluid pressure in the interior portion S1, regarding a force acting on the bearing 9, a force acting toward the axially left side which is the direction of slipping out becomes larger. The more this force acting toward the axially left side is increased, the more easily the bearing 9 is moved to the axially left side.

In the present embodiment, the convex portion 31c is formed on the axially left side of the bearing 9. Thereby, even when the bearing 9 is to be moved to the axially left side, the movement is regulated by abutting with the convex portion 31c. That is, slipping out from the accommodation portion S2 to the interior portion S1 is prevented.

As described above, the retaining mechanism of the present embodiment is the convex portion 31c provided on the accommodation portion S2 side of the bearing 9, the convex portion protruding on the radially inner side. According to this, it is possible to simply and conveniently configure the retaining mechanism.

Also, the convex portion 31c is installed between the interior portion S1 side and the bearing 9. Thus, even with a cylindrical bearing 9 where a flange 109b as in Modified Examples 1 to 3 illustrated in FIG. 2A to be described later is not formed, it is possible to achieve prevention of slipping out only by arranging the bearing 9 in the recessed portion 31e. With the holding member 31 of the present embodiment, it is possible to prevent the bearing 9 from slipping out to the interior side with a configuration simpler and more convenient than Modified Examples 2 and 3 where not only the shape of the bearing but also the shape of the holding member are different.

Also, since the convex portion 31c is formed in a ring shape, the bearing 9 abutted with the convex portion 31c is not easily tilted. Thereby, the convex portion 31c can reliably prevent the bearing 9 from slipping out to the interior portion S1. Also, by forming the convex portion 31c in a ring shape, it is possible to enhance a structural strength of the convex portion 31c.

It is noted that the convex portion 31c is preferably formed in a ring shape from a viewpoint of prevention of tilting of the bearing 9 and the structural strength, but may be divided in the circumferential direction, or one or more piece-shaped or projection-shaped convex portion may be formed, or the convex portion may be appropriately changed. In a case where a plurality of piece-shaped or projection-shaped convex portions are formed, the convex portions are preferably arranged at equal intervals.

Also, in the body 3, the tubular bottomed fixed core 30 and the holding member 31 that holds the bearing 9 are separated bodies. Thereby, it is possible to arrange the bearing 9 by attaching the holding member 31 to which the bearing 9 is fixed to the fixed core 30. That is, arrangement of the bearing 9 is simple and convenient.

Also, since the fixed core 30 has an integral structure, an axis positioning of a first fixed core 130A and a second fixed core 130B of a second embodiment to be described later is already done in the small diameter peripheral wall 34. From this, it is possible to assemble the body 3 only by attaching the holding member 31 to the fixed core 30. That is, assembling of the body 3 is simple and convenient.

With reference to FIG. 2, Modified Examples 1 to 5 of the retaining mechanism will be described.

With reference to FIG. 2A illustrating Modified Example 1, in a holding member 131, a through hole 131d formed in a base portion 131a passes through over the axial direction. A bearing 109 has a cylindrical portion 109a extending in the axial direction, and a flange 109b serving as a retaining mechanism. The flange 109b is formed in a ring shape protruding on the radially outer side of an axially right end of the cylindrical portion 109a.

The cylindrical portion 109a is fitted into the through hole 131d formed in the base portion 131a.

The flange 109b is abutted with an axially right end surface 131f of the base portion 131a. Thereby, even when the bearing 109 is to be moved to the axially left side, the movement is regulated.

In such a way, by making the retaining mechanism the flange 109b, it is possible to simply and conveniently configure the retaining mechanism.

It is noted that the flange 109b is preferably formed in a ring shape from a viewpoint of prevention of tilting of the bearing 109 and a structural strength, but may be divided in the circumferential direction, or one or more piece-shaped or projection-shaped flanges may be formed, or the flange may be appropriately changed. In a case where a plurality of piece-shaped or projection-shaped flanges are provided, the flanges are preferably arranged at equal intervals.

With reference to FIG. 2B illustrating Modified Example 2, a right end of a through hole 231d of a holding member 231 is a ring-shaped recessed portion 231e whose diameter is increased. A flange 209b of a bearing 209 is fitted into and fixed to the recessed portion 231e.

With such a configuration, it is possible to shorten a size of the bearing 209 protruding on the axially right side of the holding member 231, or to prevent the bearing 209 from protruding on the axially right side.

Also, by forming the recessed portion 231e in the holding member 231, it is possible to reduce a radial thickness on the movable core 4 side, that is, on the axially right side. Thereby, the magnetic flux transmitted from the movable core 4 to the holding member 231 concentrates on the fixed core 30 side more easily than the first embodiment. Thus, a suctioning force is more easily obtained.

With reference to FIG. 2C illustrating Modified Example 3, a retaining mechanism of the present modified example is configured by a through hole 331d of a holding member 331, and a bearing 309.

The through hole 331d is formed in a tapered shape whose diameter is reduced gradually toward the axially left side. Also, the bearing 309 is formed in a tapered cylindrical shape whose diameter is reduced gradually toward the axially left side. Thereby, even when the bearing 309 fitted into and fixed to the through hole 331d is to be moved to the axially left side, the movement is regulated.

As exemplified in the first embodiment and Modified Examples 1 to 3, the retaining mechanism may have a configuration that prevention of slipping out of the bearing from an accommodation portion to an interior portion by engaging the holding member with the bearing, and a structure thereof may be appropriately changed.

With reference to FIG. 2D illustrating Modified Example 4, a retaining mechanism of the present modified example is configured by a plurality of bolts 11 screwed into a holding member 431. The bolts 11 are arranged at equal intervals. It is noted that the number and arrangement of the bolts 11 may be appropriately changed.

In more detail, in a base portion 431a of the holding member 431, a female screw portion 431g extending from an axially left end surface to the axially right side is formed. A male screw portion 11a of the bolt 11 is screwed into the female screw portion 431g.

A head portion 11b of the bolt 11 protrudes on the radially inner side of an inner peripheral surface that defines a through hole 431d of the holding member 431. Thereby, even when the bearing 9 is to be moved to the axially left side, the movement is regulated by abutting with the head portion 11b.

With reference to FIG. 2E illustrating Modified Example 5, a retaining mechanism of the present modified example is configured by a plurality of bolts 111 screwed into a holding member 531. The bolts 111 are arranged at equal intervals. It is noted that the number and arrangement of the bolts 111 may be appropriately changed.

In more detail, in a base portion 531a of the holding member 531, a female screw portion 531g passing through in the radial direction is formed on the axially left side. A male screw portion 111a of the bolt 111 is screwed into the female screw portion 531g. Thereby, even when the bearing 9 is to be moved to the axially left side, the movement is regulated by abutting with the male screw portion 111a.

As illustrated with Modified Examples 4 and 5 described above, the retaining mechanism may be configured by using members different from the holding member and the bearing.

### {Second embodiment}

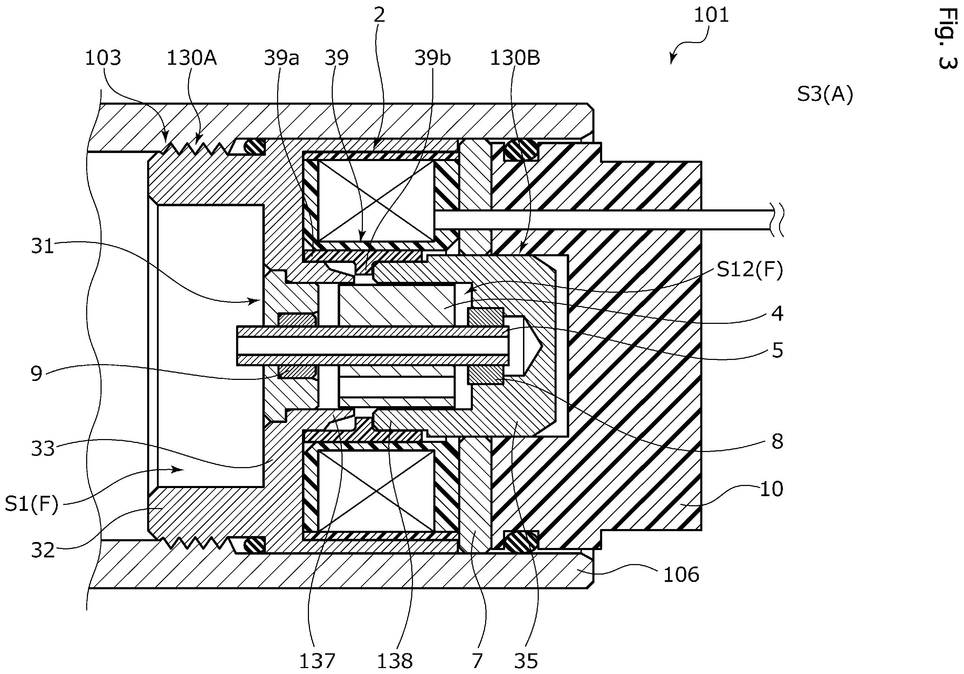

A solenoid device according to the second embodiment will be described with reference to FIG. 3. It is noted that a description of the same and duplicated configurations as the first embodiment will be omitted.

As illustrated in FIG. 3, in the present embodiment, a body 103 of a solenoid device 101 has the first fixed core 130A, the second fixed core 130B, a holding member 31, and a non-magnetic member 39. In the present embodiment, the first fixed core 130A is fixed to a solenoid case 106 by screwing, and a portion between the solenoid case 106 and the first fixed core 130A is sealed by a packing. It is noted that the solenoid case may be part of an attached device (not illustrated), or may be attached and fixed to an attached device.

The first fixed core 130A is molded into an integral stepped cylindrical shape having a large diameter peripheral wall 32, a ring-shaped side wall 33, and a small diameter peripheral wall 137 in order from the axially left side.

The small diameter peripheral wall 137 is formed in an outside-stepped cylindrical shape extending in the axial direction from a radially inner end of the ring-shaped side wall 33. Also, a leading end of the small diameter peripheral wall 137, that is, an axially right end is formed in a stepped tapered shape whose diameter is reduced gradually toward the radially inner side.

The second fixed core 130B is molded into an integral bottomed cylindrical shape having a small diameter peripheral wall 138 and a side wall 35 in order from the axially left side.

The small diameter peripheral wall 138 is formed in a stepped cylindrical shape. A right end of the small diameter peripheral wall 138 is closed by the side wall 35.

The non-magnetic member 39 is formed in an inside-stepped cylindrical shape made of a non-magnetic body such as an aluminum alloy. The non-magnetic member 39 has a cylindrical portion 39a extending in the axial direction. Also, in an axial center of the cylindrical portion 39a, a ring-shaped convex portion 39b protruding on the radially inner side is formed.

The small diameter peripheral wall 137 of the first fixed core 130A is fitted into and fixed to the cylindrical portion 39a in a sealed manner from the axially left side toward the right side. Also, the small diameter peripheral wall 138 of the second fixed core 130B is fitted into and fixed to the cylindrical portion 39a in a sealed manner from the axially right side toward the left side. That is, the first fixed core 130A and the second fixed core 130B are coupled to each other by the non-magnetic member 39.

In the first fixed core 130A and the second fixed core 130B coupled to each other by the non-magnetic member 39, the respective axes of the small diameter peripheral walls 137, 138 substantially match with each other.

The first fixed core 130A, the second fixed core 130B, the non-magnetic member 39, and the holding member 31 fitted into and fixed to the first fixed core 130A configure an accommodation portion S12.

Also, in a portion between the small diameter peripheral wall 137 of the first fixed core 130A and the small diameter peripheral wall 138 of the second fixed core 130B in the axial direction, the ring-shaped convex portion 39b of the non-magnetic member 39 is arranged.

That is, the small diameter peripheral wall 137 of the first fixed core 130A and the small diameter peripheral wall 138 of the second fixed core 130B are prevented from contacting with each other by the ring-shaped convex portion 39b of the non-magnetic member 39.

A magnetic path configured at the time of passing a current through a coil 2 is mainly configured by the ring-shaped side wall 33 of the first fixed core 130A, the solenoid case 106, a plate 7, the small diameter peripheral wall 138 of the second fixed core 130B, a movable core 4, and the small diameter peripheral wall 137 of the first fixed core 130A.

Also, the small diameter peripheral wall 137 of the first fixed core 130A and the small diameter peripheral wall 138 of the second fixed core 130B are separated from each other, and further, the ring-shaped convex portion 39b of the non-magnetic member 39 made of a non-magnetic body is placed between the small diameter peripheral wall 137 and the small diameter peripheral wall 138. Thereby, magnetic flux is more easily transmitted to the movable core 4 more efficiently than the fixed core 30 of the first embodiment.

In such a way, as long as the magnetic path can be formed, the shape of the body may be appropriately changed.

Also, even in a case where the body 103 is configured by a plurality of members, the holding member 31 can prevent a bearing 9 from slipping out to an interior portion S1.

The embodiments of the present invention are described above based on the drawings. However, specific configurations are not limited to these embodiments and the present invention includes changes and additions within a range not departing from the scope of the present invention.

For example, in the first and second embodiments, the configuration that the actuated fluid is distributed through the interior portion and the accommodation portion and the atmosphere is distributed through the space on the exterior side is described. However, the present invention is not limited to this but a fluid different from the actuated fluid other than the atmosphere may be distributed through the space on the exterior side, or a fluid to be distributed through the interior portion and the accommodation portion and a fluid to be distributed through the space on the exterior side may be the same fluid. In other words, the actuated fluid may also be distributed through the space on the exterior side.

Also, in the first and second embodiments, the damper is exemplified as the actuating device. However, the present invention is not limited to this but may be appropriately changed as long as the device requires drive by the solenoid device. Also, the present invention may be applied to a device where almost no differential pressure is generated between an interior portion and an accommodation portion. Even under such an application environment, even when a bearing is to be moved to the interior side by external disturbances, etc., it is possible to achieve prevention of slipping out of the bearing.

Also, in the first and second embodiments, the configuration that the holding member is a separate body from the fixed core is described. However, the present invention is not limited to this but the holding member may be provided integrally with the fixed core.

Also, in the first and second embodiments, the holding member is described to be made of a magnetic body. However, the present invention is not limited to this but the holding member may be made of a non-magnetic body. With such a configuration, a member made of a magnetic body is preferably provided at a position overlapping with the movable core in the axial direction, separately from the holding member.

### {REFERENCE SIGNS LIST}

- 1: Solenoid device
- 2: Coil
- 3: Body
- 4: Movable core
- 5: Axial rod
- 8, 9: Bearing
- 30: Fixed core
- 31: Holding member
- 40: Communication hole
- 50: Communication hole
- 101: Solenoid device
- 103: Body
- 130A: First fixed core
- 130B: Second fixed core
- 39: Non-magnetic member
- 109: Bearing
- 131, 231: Holding member
- 109b: Flange (retaining mechanism)
- 309: Bearing (retaining mechanism)
- 331: Holding member (retaining mechanism)
- 431, 531: Holding member
- 11, 111: Bolt (retaining mechanism)
- A: Atmosphere
- F: Actuated fluid
- S1: Interior portion (interior side)
- S2, S12: Accommodation portion
- S3: Space on exterior side

## Claims

1. A solenoid device, comprising:
a coil;
a body;
a movable core arranged in an accommodation portion which is formed on a radially inner side of the body;
an axial rod to be moved together with the movable core; and
a bearing that extends from a housing portion side on which the accommodation portion is disposed toward a machine interior side on which an object to be actuated by the solenoid device is disposed, and that is configured to guide movement of the axial rod,
wherein the accommodation portion and the interior side communicate with each other by means of fluid, and
wherein the solenoid device has a retaining mechanism configured to regulate the bearing from moving from the accommodation portion side to the interior side.

2. The solenoid device according to claim 1,
wherein the retaining mechanism is a convex portion protruding toward a radially inner side in the interior side of the body.

3. The solenoid device according to claim 2,
wherein the convex portion is installed between the interior side and the bearing.

4. The solenoid device according to claim 2,
wherein the convex portion is formed in a ring shape.

5. The solenoid device according to claim 1,
wherein the retaining mechanism is a flange of the bearing.

6. The solenoid device according to any one of claims 1 to 5,
wherein the body is provided with a fixed core formed in a tubular-bottomed shape, and a holding member configured to hold the bearing.

7. The solenoid device according to claim 6,
wherein the fixed core has an integral structure configured for housing the movable core.
